# EUROPEAN PATENT SPECIFICATION

(11) **EP 2 305 977 B1**
(45) Date of publication and mention of the grant of the patent: **06.06.2012**
(21) Application number: 10175859.7
(22) Date of filing: 08.09.2010
(51) Int. Cl.: F01N 3/025, F01N 9/00, F01N 11/00

(54) **Abnormality determination system for filter**
System zur Erkennung von Anomalien für Filter
Système de détection d'anomalies pour filtre

(30) Priority: 24.09.2009 JP 2009219684
(43) Date of publication of application: 06.04.2011
(73) Proprietor: Honda Motor Co., Ltd., Tokyo 107-8556 (JP)
(72) Inventor: Gosyo, Eisaku, Saitama 351-0193 (JP); Goto, Shinza, Saitama 351-0193 (JP); Itou, Yasuaki, Saitama 351-0193 (JP)
(74) Representative: Prechtel, Jörg

(56) References cited:
- EP-A1- 1 602 806
- EP-A2- 1 942 262
- JP-A- 2007 002 694
- US-A1- 2006 254 265

## Description

### Field of the Invention

The present invention relates to an abnormality determination system for a filter that collects particulates from exhaust gases discharged from an internal combustion engine to thereby purify the exhaust gases.

### Description of the Related Art

Conventionally, as an abnormality determination system for a filter, there has been known, for example, one disclosed in Japanese Laid-Open Patent Publication (Kokai) No. 2007-2694. This filter is disposed in an exhaust passage, and a differential pressure pipe connects between respective portions of the exhaust passage upstream and downstream of the filter. The differential pressure pipe has a differential pressure sensor provided therein, for detecting the differential pressure between a pressure on the upstream side and a pressure on the downstream side of the filter.

The abnormality determination system determines that the differential pressure pipe is in a frozen state, when the detected atmospheric air temperature is not higher than a predetermined temperature and at the same time the detected temperature of exhaust gases is not higher than a predetermined temperature. When the differential pressure pipe is not determined to be in the frozen state and the differential pressure detected by the differential pressure sensor is not within a predetermined range, the abnormality determination system determines that there has occurred an abnormality in the filter. In such a case, a warning lamp is turned on to thereby warn a driver of the abnormality of the filter. On the other hand, if it is determined that the differential pressure pipe is in the frozen state, when the detected differential pressure is not within the predetermined range, the abnormality determination system determines that the differential pressure is not within the predetermined range not because of the abnormality of the filter but because of freezing of the differential pressure pipe, and determines that no abnormality has occurred in the filter.

Further, when the differential pressure is not within the predetermined range, the abnormality determination system executes a failsafe action irrespective of the determination result of the frozen state of the differential pressure pipe. The failsafe action controls the operation of the engine such that no particulates deposited on the filter are burned, and is executed by limiting the fuel injection amount and the engine rotational speed.

As described above, in the conventional abnormality determination system, it is only determined that the differential pressure pipe is in the frozen state, when the atmospheric air temperature is not higher than the predetermined temperature and at the same time the temperature of exhaust gases is not higher than the predetermined temperature. Therefore, even when the differential pressure pipe is not actually in the frozen state, it can be erroneously determined to be in the frozen state. Further, in the conventional abnormality determination system, even when the differential pressure is not within the predetermined range, the filter is not determined to be abnormal insofar as the differential pressure pipe is determined to be in the frozen state. Therefore, even when the differential pressure pipe is not actually in the frozen state and the filter is abnormal, the filter is sometimes not determined to be abnormal. In this case, the abnormality of the filter is not notified to the driver, whereby the driver cannot take proper and quick measures against the abnormality of the filter.

Furthermore, in the conventional abnormality determination system, when the differential pressure is not within the predetermined range, the failsafe action is executed irrespective of the frozen state of the differential pressure pipe. Therefore, the failsafe action can be executed even when no abnormality has occurred in the filter. In this case, the fuel injection amount and the engine rotational speed are unnecessarily limited, which results in the degraded drivability.

### SUMMARY OF THE INVENTION

It is an object of the present invention to provide an abnormality determination system for a filter, which is capable of properly determining the frozen state of a differential pressure pipe to thereby improve the accuracy of abnormality determination of the filter.

To attain the above object, the present invention provides an abnormality determination system for a filter that is disposed in an exhaust passage for collecting particulates from exhaust gases discharged from an internal combustion engine to thereby purify the exhaust gases, including a differential pressure pipe connected between respective portions of an exhaust passage upstream and a downstream of the filter, differential pressure-detecting means disposed in the differential pressure pipe, for detecting a differential pressure between pressures on the upstream side and the downstream side of the filter, and abnormality-determining means for determining whether or not the filter is abnormal, based on the detected differential pressure, characterized by comprising specific operating state-determining means for determining whether or not the engine is in a specific operating state, frozen state-determining means for determining whether or not the differential pressure pipe is in a frozen state, based on the detected differential pressure, when the specific operating state-determining means determines that the engine is in the specific operating state, and determination inhibiting means for inhibiting the abnormality-determining means from determining that the filter is abnormal, when the frozen state-determining means determines that the differential pressure pipe is in the frozen state.

With this configuration, the filter collects particulates (hereinafter simply referred to as "PM" (Particulate Matter)) from exhaust gases discharged from the engine. According to the abnormality determination system, the differential pressure pipe is connected to the respective portions of the exhaust passage upstream and downstream of the filter, and the differential pressure-detecting means disposed in the differential pressure pipe detects the differential pressure between the pressures on the upstream side and the downstream side of the filter. Further, it is determined whether or not the filter is abnormal, based on the differential pressure.

It was confirmed that freezing of the differential pressure pipe is liable to occur on the downstream side thereof. Further, it was confirmed that when the differential pressure pipe is frozen, and is blocked e.g. by ice or frost, the behavior of the differential pressure changes according to the operating conditions of the engine. This is for the following reason:

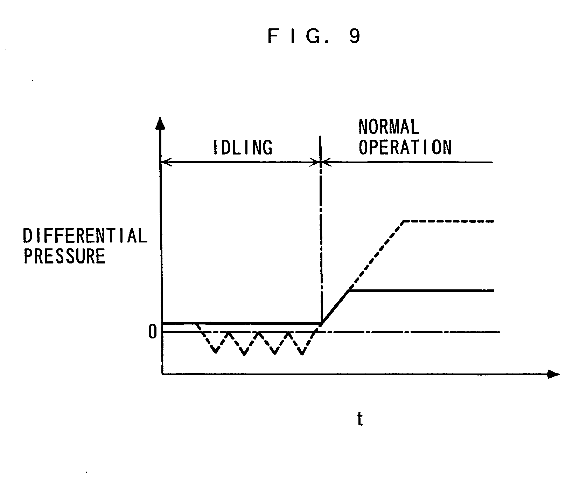

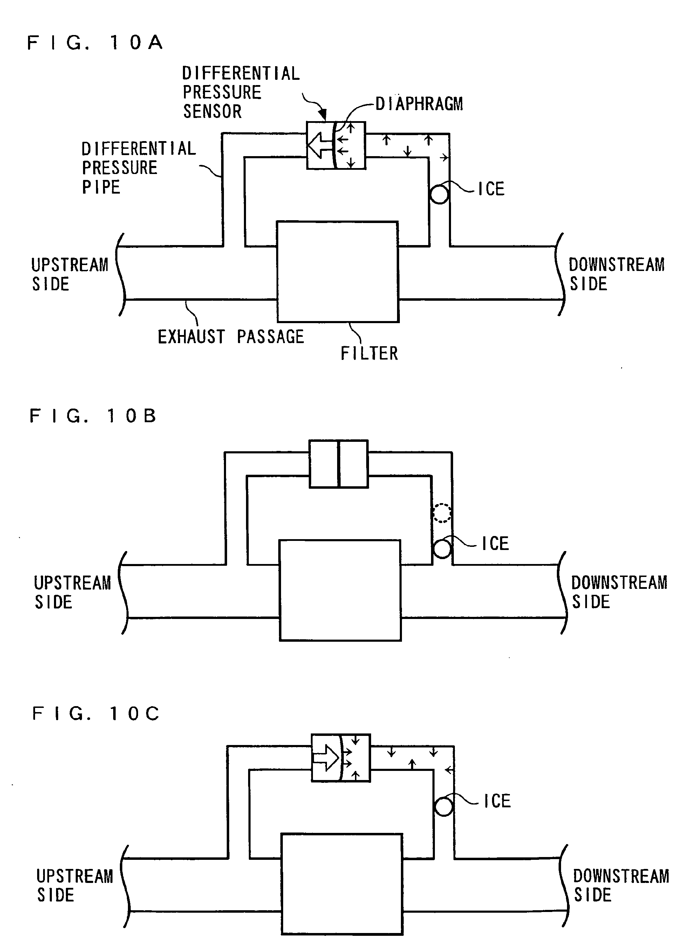

FIG. 9 shows changes in the differential pressure in a case where the engine has shifted from idling to normal operation, when the filter is normal. In FIG. 9, a solid line indicates a case where the differential pressure pipe is not frozen, and a broken line indicates a case where the differential pressure pipe is frozen. FIGS. 10A to 10C show an example of the behavior of gases in the differential pressure pipe when the differential pressure sensor has a diaphragm.

As indicated by the solid line in FIG. 9, during idling of the engine, the differential pressure has characteristics that when the differential pressure pipe is not frozen, the differential pressure between the upstream side and the downstream side of the filter takes a relatively small, approximately fixed, positive value, whereas when the differential pressure pipe is frozen, the differential pressure takes a negative value, as indicated by the broken line. This is because when the differential pressure pipe is frozen, the vehicle speed during idling of the engine is equal to 0, so that the degree of cooling of the differential pressure pipe, by wind generated by running of the vehicle, is low, and the differential pressure pipe is liable to be warmed up by exhaust gases, whereby gases trapped in a space formed by the diaphragm and ice downstream of the diaphragm expand (FIG. 10A) to increase pressure on the downstream side of the diaphragm. Further, the temperature of gases and the pressure on the downstream side of the diaphragm are in proportional relationship as can be understood from the equation of state of gas. Therefore, as the idling time period is longer, the temperature of the gases becomes higher, whereby the pressure on the downstream side of the diaphragm becomes larger. Furthermore, when the temperature of the gases become higher and the ice starts to melt, the ice moves in the differential pressure pipe toward the downstream side, and stops at a location where the differential pressure becomes approximately equal to 0 (FIG. 10B). In this state, when the differential pressure pipe is warmed, the gases trapped in the space between the diaphragm and the ice expand again, so that the differential pressure takes a negative value. Further, when the differential pressure pipe is warmed by exhaust gases, the ice moves again to a location where the differential pressure becomes approximately equal to 0. Such a behavior is repeated, whereby as indicated by the broken line in FIG. 9, when the engine is idling, the differential pressure changes in a saw-tooth form within a differential pressure range of not larger than 0.

On the other hand, during normal operation of the engine, the differential pressure has a characteristic that when the differential pressure pipe is frozen, the differential pressure takes too large a positive value, as indicated by the broken line in FIG. 9. This is because during normal operation of the engine, the degree of cooling of the differential pressure pipe by wind generated by running of the vehicle is high, and hence gases trapped in the space between the diaphragm and the ice shrink (FIG. 10C), to thereby make the pressure on the downstream side of the diaphragm negative. As described above, when the engine is in the specific operating state, such as idling, the differential pressure across the filter can exhibit different behaviors depending on the frozen state of the differential pressure pipe.

Based on the above-described viewpoints, according to the present invention, when it is determined that the engine is in the specific operating state, it is determined whether or not the differential pressure pipe is in the frozen state, based on the detected differential pressure, and hence it is possible to properly determine the frozen state of the differential pressure pipe. Further, when it is determined that the differential pressure pipe is in the frozen state, determination that the filter is abnormal is inhibited. This makes it possible to avoid erroneous abnormality determination of the filter based on the differential pressure obtained when the differential pressure pipe is in the frozen state, thereby making it possible to improve the accuracy of the abnormality determination of the filter. Therefore, it is possible to avoid e.g. an erroneous notification to a driver based on erroneous determination that the filter is abnormal, or unnecessary limitation to the operation of the engine, whereby it is possible to improve drivability.

Preferably, the specific operating state is at least one of a state where the engine is being started and an after-run state of the engine immediately after stoppage of the engine, and when the specific operating state-determining means determines that the engine is in at least one of the state where the engine is being started and the after-run state, the frozen state-determining means determines that the differential pressure pipe is in the frozen state, when a difference between a predetermined pressure and the differential pressure is not smaller than a predetermined value.

When the engine is in the state of being started or in the after-run state immediately after stoppage of the engine, the flow rate of gases flowing into the differential pressure pipe is small, and no combustion is executed, so that the gases in the differential pressure pipe are not expanded by the heat of exhaust gases. Further, since the vehicle is at a stop, the heat of exhaust gases is not deprived of by wind generated by running of the vehicle, and the gases are prevented from shrinking. For the reasons stated above, in the state of being started or in the after-run state, the differential pressure should be stable, and be equal to the predetermined pressure or take a value in the vicinity of the predetermined pressure unless the differential pressure pipe is in the frozen state. Based on the above-described viewpoints, according to this preferred embodiment, in the case where it is determined that the engine is in the state of being started or in the after-run state, when the difference between the predetermined pressure and the detected differential pressure is not smaller than a predetermined value, it is determined that the differential pressure pipe is in the frozen state. This makes it possible to properly determine the frozen state.

Preferably, the specific operating state is an idling state of the engine, and when the specific operating state-determining means determines that the engine is in the idling state, the frozen state-determining means determines that the differential pressure pipe is in the frozen state, when a difference between a maximum value and a minimum value of the differential pressure in the idling state is not smaller than a predetermined value.

As described above, in the idling state, when the differential pressure pipe is not frozen, the differential pressure is approximately fixed, whereas when the differential pressure pipe is frozen, the differential pressure largely changes, and hence the difference between the maximum value and the minimum value of the differential pressure in the idling state becomes larger. Based on the above-described viewpoints, according to this preferred embodiment, in the case where it is determined that the engine is in the idling state, when the difference between the maximum value and the minimum value of the differential pressure is not smaller than a predetermined value, it is determined that the differential pressure pipe is in the frozen state, so that it is possible to properly determine the frozen state.

Preferably, the abnormality determination system further comprises regeneration operation execution means for executing a regeneration operation for regenerating the filter by causing particulates deposited on the filter to be burned, and regeneration operation forcible execution means for forcibly executing the regeneration operation for regenerating the filter separately from the regeneration operation execution means, immediately after the frozen state-determining means has determined that the differential pressure pipe is in the frozen state.

With this configuration, PM collected and deposited on the filter is burned by the regeneration operation using the regeneration operation execution means, whereby the filter is regenerated. Further, the filter is regenerated by forcibly executing the regeneration of the filter by the regeneration operation forcible execution means. Since the filter has been regenerated by the regeneration operation execution means, the amount of PM deposited on the filter is relatively small immediately after it is determined that the differential pressure pipe is in the frozen state. Therefore, even when the regeneration of the filter is forcibly executed immediately after the differential pressure pipe has been frozen, there is no fear that thermal runaway is caused by the combustion of PM. Further, the amount of deposited PM can be reduced to approximately 0 by the above-described forcible regeneration of the filter, so that even when the frozen state continues for a long time period, it is possible to suppress the amount of PM deposited along with operation of the engine thereafter.

More preferably, the abnormality determination system further comprises regeneration operation-inhibiting means operable when the differential pressure pipe is determined to be in the frozen state, to inhibit the regeneration operation for regenerating the filter by the regeneration operation execution means, until the differential pressure pipe is determined not to be in the frozen state.

As described hereinabove, if the differential pressure pipe is determined to be in the frozen state, the determination that the filter is abnormal is not carried out, and therefore even when there occurs such abnormality that an excess amount of PM is deposited on the filter, determination of the abnormality is not performed. According to this preferred embodiment, if the differential pressure pipe is determined to be in the frozen state, the operation for regenerating the filter by the regeneration operation execution means is inhibited from then on until the differential pressure pipe is determined not to be in the frozen state. This inhibits the regeneration operation even when an excess amount of PM is deposited on the filter, whereby it is possible to prevent the filter from being overheated by thermal runaway caused by sudden combustion of the excess amount of PM deposited on the filter, thereby making it possible to prevent cracking or melting of the filter. Further, as described heretofore, regeneration of the filter is forcibly performed by the regeneration operation forcible execution means immediately after the differential pressure pipe is determined to be in the frozen state, so that even if the operation for regenerating the filter by the regeneration operation execution means is inhibited until the differential pressure pipe is determined not to be in the frozen state, the amount of PM deposited on the filter can be suppressed, whereby it is possible to avoid thermal runaway caused by regeneration of the filter which is executed when the differential pressure pipe is determined not to be in the frozen state.

Preferably, the abnormality determination system further comprises torque-limiting means operable when the differential pressure pipe is determined to be in the frozen state, to limit torque of the engine until the differential pressure pipe is determined not to be in the frozen state.

With this configuration, when the differential pressure pipe is determined to be in the frozen state, the torque of the engine is limited. This makes it possible to prevent a rise in the temperature of exhaust gases, thereby making it possible to prevent natural combustion of PM. As a result, when an excess amount of PM is deposited on the filter, it is possible to prevent thermal runaway from being caused by natural combustion of the PM.

Preferably, the abnormality determination system further comprises engine off time-acquiring means for acquiring engine off time before the engine is started, and in a case where the frozen state-determining means has determined that the differential pressure pipe is in the frozen state, the frozen state-determining means determines that the differential pressure pipe has been released from the frozen state, when the acquired engine off time is longer than a predetermined time period and at the same time a difference between a predetermined pressure and the differential pressure is smaller than a predetermined value when the engine is being started thereafter.

If the engine off time is long, temperature in the engine room and temperature of the filter and its neighborhood are stable in a state where the temperatures are approximately equal to an outside air temperature, whereby the differential pressure is stabilized. In such a stable state, during the start of the engine, freezing of the differential pressure pipe has conspicuous influence on the differential pressure, and hence it is possible to accurately determine whether or not the differential pressure pipe is in the frozen state. Based on the above-described viewpoints, according to this preferred embodiment, in a case where it has been determined that the differential pressure pipe is in the frozen state, if the acquired engine off time is longer than the predetermined time period and at the same time the difference between the predetermined pressure and the differential pressure is smaller than the predetermined value when the engine is being started thereafter, it is determined that the differential pressure pipe is released from the frozen state. This makes it possible to properly cancel the determination that the differential pressure pipe is in the frozen state while eliminating influence of the temperature of the filter and its neighborhood on the differential pressure.

The above and other objects, features, and advantages of the present invention will become more apparent from the following detailed description taken in conjunction with the accompanying drawings.

### BRIEF DESCRIPTION OF THE DRAWINGS

FIG. 1 is a schematic view of an internal combustion engine to which is applied the present invention;
FIG. 2 is a main routine of a process for determining abnormality of a filter;
FIG. 3 is a subroutine of a process for determining a frozen state of a differential pressure pipe;
FIG. 4 is a subroutine of a process for determining whether environmental conditions are satisfied;
FIG. 5 is a main routine of a process for controlling a regeneration operation for regenerating the filter;
FIG. 6 is a subroutine of a variation of the process for determining a frozen state of the differential pressure pipe;
FIG. 7 is a subroutine of a process for determining an idling operation;
FIG. 8 is a subroutine of a process for calculating a maximum value and a minimum value of the differential pressure;
FIG. 9 is a view showing changes in the differential pressure in a case where the engine has shifted from idling to normal operation, when the filter is normal; and
FIGS. 10A to 10C are views showing an example of the behavior of gases in the differential pressure pipe.

### DETAILED DESCRIPTION OF PREFERRED EMBODIMENTS

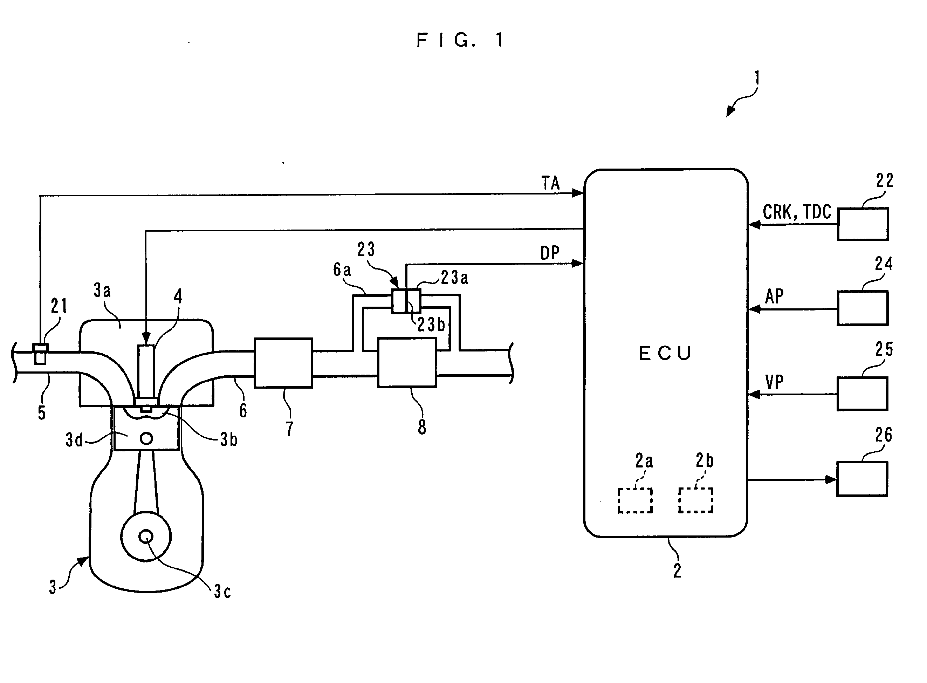

The invention will now be described in detail with reference to drawings showing a preferred embodiment thereof. FIG. 1 schematically shows an abnormality determination system 1 according to an embodiment of the present invention, and an internal combustion engine (hereinafter referred to as the "engine") 3 to which is applied the abnormality determination system 1. The engine 3 is a diesel engine that has e.g. four cylinders, and is installed on a vehicle (not shown).

A cylinder head 3a of the engine 3 has a fuel injection valve (hereinafter referred to as the "injector") 4 mounted therethrough for each associated cylinder such that the injector 4 faces a combustion chamber 3b of the associated cylinder. The valve-opening time period and the valve-opening timing of the injector 4 are controlled by a drive signal from an ECU 2, whereby a fuel injection amount QINJ and fuel injection timing are controlled.

An intake passage 5 of the engine 3 is provided with an intake air temperature sensor 21. The intake air temperature sensor 21 detects a temperature TA within the intake passage 5 (hereinafter referred to as the "intake air temperature TA"), and delivers a detection signal indicative of the detected intake air temperature TA to the ECU 2.

Further, the engine 3 is provided with a crank angle sensor 22. The crank angle sensor 22 delivers a CRK signal and a TDC signal, which are both pulse signals, to the ECU 2 along with rotation of a crankshaft 3c.

Each pulse of the CRK signal is generated whenever the crankshaft 3c rotates through a predetermined crank angle (e.g. 30°). The ECU 2 calculates a rotational speed NE of the engine 3 (hereinafter referred to as the "engine speed NE") based on the CRK signal. Further, the TDC signal indicates that a piston 3d of one of the cylinders of the engine 3 is in a predetermined crank angle position slightly before the TDC position at the start of the intake stroke. In the case of the four-cylinder engine 3 of the present embodiment, the TDC signal is delivered whenever the crankshaft 3c rotates through 180°.

An oxidation catalyst 7 and a filter 8 are provided at respective locations of an exhaust passage 6 from upstream to downstream in the mentioned order. The oxidation catalyst 7 is formed of a metal honeycomb core (not shown) carrying a zeolite (not shown) on the surface thereof. The zeolite has a characteristic that it traps hydrocarbons (hereinafter referred to as "HC"). With the above-described arrangement, HC contained in unburned fuel in exhaust gases discharged from the combustion chamber 3b into the exhaust passage 6 is trapped by the zeolite when it passes through the oxidation catalyst 7, and undergoes oxidation reaction with oxygen in the exhaust gases in the oxidation catalyst 7. The temperature of the exhaust gases is raised by heat generated by the oxidation reaction, and further the temperature of the filter 8 on the downstream side of the oxidation catalyst 7 is raised by the exhaust gases the temperature of which is thus raised.

The filter 8 has a honeycomb core (not shown) formed e.g. of a porous ceramic, and is configured such that it collects PM, such as soot, from exhaust gases to thereby reduce the amount of PM emitted into the air. Further, when the temperature of the filter 8 is not lower than a predetermined temperature, PM deposited on the filter 8 is burned, whereby the filter 8 is regenerated.

Further, the exhaust passage 6 has a differential pressure pipe 6a connected thereto which connects between a portion of the exhaust passage 6 between the oxidation catalyst 7 and the filter 8, and a portion of the same downstream of the filter 8 in a manner bypassing the filter 8. The differential pressure pipe 6a is provided with a differential pressure sensor 23. The differential pressure sensor 23 is of a diaphragm type which has a diaphragm 23b for partitioning a differential pressure chamber 23a into upstream and downstream sections, and is configured to detect a differential pressure DP in the exhaust passage 6 between the upstream side and the downstream side of the filter 8, to deliver a detection signal indicative of the detected differential pressure to the ECU 2.

Delivered to the ECU 2 are a detection signal indicative of a stepped-on amount AP of an accelerator pedal (not shown) of the vehicle (hereinafter referred to as the "accelerator pedal opening AP") from an accelerator pedal opening sensor 24, and a detection signal indicative of a vehicle speed VP from a vehicle speed sensor 25. Further, a warning lamp 26 for warning a driver that the filter 8 is abnormal is connected to the ECU 2.

The ECU 2 is implemented by a microcomputer comprised of a CPU, a RAM, a ROM, and an I/O interface (none of which are specifically shown). Further, the ECU 2 includes first and second timers 2a and 2b of an up-count type. The ECU 2 determines operating conditions of the engine 3 based on the detection signals from the aforementioned sensors 21 to 25, and depending on the determined operating conditions of the engine 3, performs control processes, such as a fuel injection control process for controlling the fuel injection amount QINJ and the fuel injection timing. The fuel injection amount QINJ and the fuel injection timing are calculated by searching respective predetermined maps (none of which are specifically shown) according to the engine speed NE and a demanded torque PMCMD. The demanded torque PMCMD is calculated by searching a predetermined map (not shown) according to the engine speed NE and the accelerator pedal opening AP.

Further, the ECU 2 executes an abnormality determination process for the filter 8, and regeneration control for controlling a regeneration operation for regenerating the filter 8.

In the present embodiment, the ECU 2 corresponds to abnormality-determining means, specific operating state-determining means, frozen state-determining means, determination inhibiting means, regeneration operation execution means, regeneration operation forcible execution means, regeneration operation-inhibiting means, and torque-limiting means.

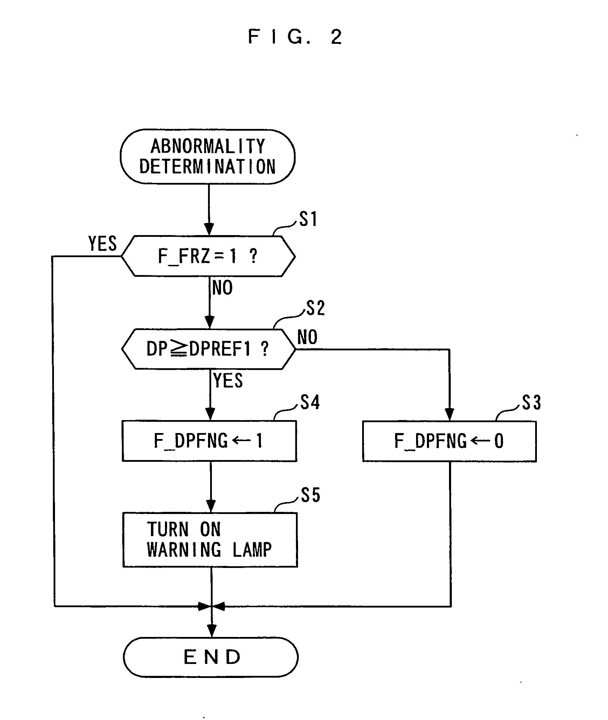

FIG. 2 is a flowchart of a process for determining abnormality of the above-mentioned filter 8. The present process is carried out in synchronism with generation of the TDC signal. In the present process, first, in a step 1 (shown as "S1" in abbreviated form in FIG. 2; the following steps are also shown in abbreviated form), it is determined whether or not a frozen state-indicative flag F_FRZ is equal to 1. The frozen state-indicative flag F_FRZ is set to 1 when it is determined that the differential pressure pipe 6a is in a frozen state. The process for determining a frozen state of the differential pressure pipe 6a will be described hereinafter.

If the answer to this question is negative (NO), i.e. if it is determined that the differential pressure pipe 6a is not in the frozen state, it is determined whether or not the differential pressure DP detected by the differential pressure sensor 23 is not smaller than a first predetermined pressure DPREF1 (step 2). If the answer to this question is negative (NO), it is judged that the filter 8 is normal since no excess amount of PM is deposited on the filter 8, and to indicate this fact, an abnormality flag F_DPFNG is set to 0 (step 3), followed by terminating the present process.

On the other hand, if the answer to the question of the step 2 is affirmative (YES), i.e. if the differential pressure DP is not smaller than the first predetermined pressure DPREF1, it is judged that an excess amount of PM is deposited on the filter 8, and to indicate this fact, the abnormality flag F_DPFNG is set to 1 (step 4). Next, the warning lamp 26 is turned on (step 5), followed by terminating the present process. The warning lamp 26 is turned on to warn the driver that an excess amount of PM has been deposited on the filter 8, and prompt the driver to bring the vehicle e.g. to a factory so as to avoid thermal runaway caused by combustion of PM in the state of the excess amount of PM being deposited on the filter 8.

Further, if the answer to the question of the step 1 is affirmative (YES), i.e. if it is determined that the differential pressure pipe 6a is in the frozen state, the present process is immediately terminated without determining the abnormality of the filter 8.

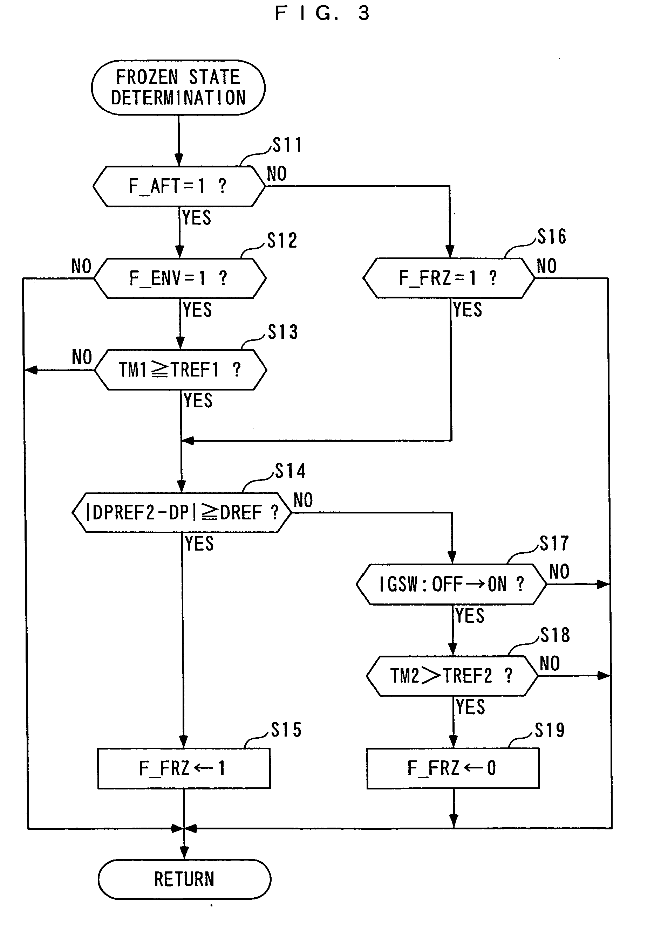

FIG. 3 is a subroutine of the above-mentioned process for determining a frozen state of the differential pressure pipe 6a. In the present process, first, in a step 11, it is determined whether or not an after-run flag F_AFT is equal to 1. The after-run flag F_AFT is set to 1 in an after-run state of the engine 3. The after-run state is a state of the engine 3 corresponding to a time period after turning off an ignition switch (not shown), during which the engine speed NE is equal to 0 and running information of the vehicle before turning off the ignition switch is being written in the ECU 2.

If the answer to the question of the step 11 is affirmative (YES), i.e. if the engine 3 is in the after-run state, it is determined whether or not an environmental condition flag F_ENV is equal to 1 (step 12). The environmental condition flag F_ENV is set to 1 when environmental conditions for performing determination of the frozen state of the differential pressure pipe 6a are satisfied. A process for determining whether the environmental conditions are satisfied will be described hereinafter.

If the answer to the question of the step 12 is negative (NO), i.e. if the environmental conditions for determining the frozen state of the differential pressure pipe 6a are not satisfied, the present process is immediately terminated without determining the frozen state.

On the other hand, if the answer to the question of the step 12 is affirmative (YES), i.e. if the environmental conditions are satisfied, it is determined whether or not a first timer value TM1 of the first timer 2a is not smaller than a first predetermined time period TREF1 (e.g. 0.3 to 0.5 sec.) (step 13). The first timer value TM1 is reset to 0 at the start of the after run.

If the answer to the question of the step 13 is negative (NO), i.e. if the first predetermined time period TREF1 has not elapsed after the start of the after run, it is judged that the differential pressure across the filter 8 is not stable, and the present process is immediately terminated without determining the frozen state.

On the other hand, if the answer to the question of the step 13 is affirmative (YES), it is judged that the differential pressure has been stabilized, and it is determined whether or not the absolute value | DPREF2-DP| of the difference between a second predetermined pressure DPREF2 and the differential pressure DP is not smaller than a predetermined value DREF (step 14). The second predetermined pressure DPREF2 corresponds to a differential pressure which should be obtained when the filter 8 is normal and the differential pressure pipe 6a is not frozen.

As described hereinbefore, in the after-run state of the engine 3, if the differential pressure DP is stable and the differential pressure pipe 6a is not frozen, it should take a value in the vicinity of the second predetermined pressure DPREF2. Therefore, if the answer to the question of the step 14 is affirmative (YES), and |DPREF2-DP|≧ DREF holds, the differential pressure DP largely deviates from the second predetermined pressure DPREF2, and it is judged that the differential pressure pipe 6a is in the frozen state. Then, to indicate this fact, the frozen state-indicative flag F_FRZ is set to 1 (step 15), followed by terminating the present process.

On the other hand, if the answer to the question of the step 11 is negative (NO), i.e. if the engine 3 is not in the after-run state, it is determined whether or not the frozen state-indicative flag F_FRZ is equal to 1 (step 16). If the answer to this question is negative (NO), the present process is terminated.

Further, if the answer to the question of the step 16 is affirmative (YES), the process proceeds to the step 14, wherein it is determined whether or not the absolute value of the difference between the second predetermined pressure DPREF2 and the differential pressure DP is not smaller than the predetermined value DREF. If the answer to this question is affirmative (YES), it is judged that the differential pressure pipe 6a continues to be in the frozen state, and the process proceeds to the step 15, wherein the frozen state-indicative flag F_FRZ is set to 1, followed by terminating the present process.

On the other hand, if the answer to the question of the step 14 is negative (NO), it is determined whether or not the ignition switch (IGSW) is turned on between the immediately preceding loop and the present loop (step 17). If the answer to this question is negative (NO), the present process is terminated.

Further, if the answer to the question of the step 17 is affirmative (YES), i.e. if it is immediately after the ignition switch has been turned on, it is determined whether or not a second timer value TM2 of the second timer 2b is larger than a second predetermined time period TREF2 (e.g. 6 to 7 hours) (step 18). The second timer value TM2 is configured such that it is reset to 0 when the ignition switch is turned off. Therefore, the second timer value TM2 obtained immediately after turning on of the ignition switch represents engine off time before the engine 3 is started. If the answer to the question of the step 18 is negative (NO), i.e. if the engine off time is not longer than the second predetermined time period TREF2, the present process is terminated.

On the other hand, if the answer to the question of the step 18 is affirmative (YES), i.e. if the engine off time is longer than the second predetermined time period TREF2, it is judged that the differential pressure pipe 6a has been released from the frozen state, and to indicate this fact, the frozen state-indicative flag F_FRZ is set to 0 (step 19), followed by terminating the present process.

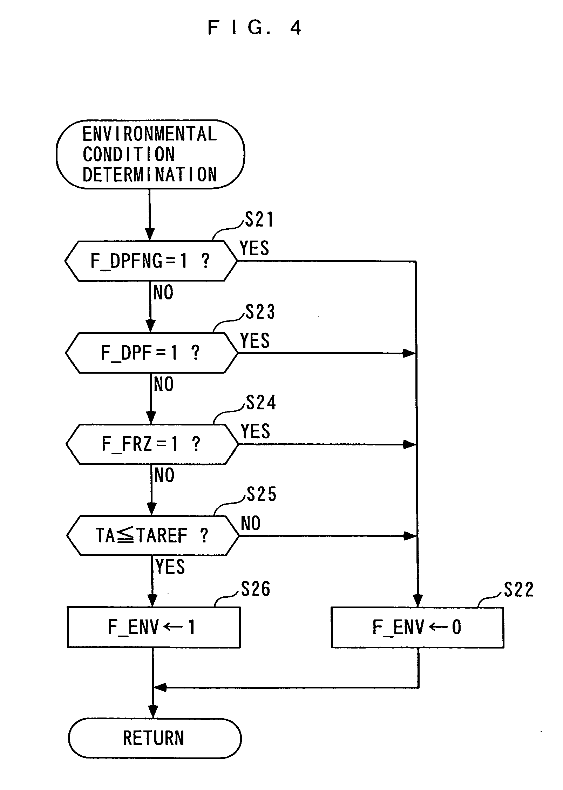

FIG. 4 is a subroutine of the above-mentioned process for determining whether the environmental conditions are satisfied. In the present process, first, in a step 21, it is determined whether or not the abnormality flag F_DPFNG set in the aforementioned step 3 or 4 is equal to 1. If the answer to this question is affirmative (YES), it is judged that the environmental conditions for determining the frozen state of the differential pressure pipe 6a are not satisfied since the filter 8 is determined to be abnormal, and to indicate this fact, the environmental condition flag F_ENV is set to 0 (step 22), followed by terminating the present process.

On the other hand, if the answer to the question of the step 21 is negative (NO), it is determined whether or not a regeneration flag F_DPF is equal to 1 (step 23). The regeneration flag F_DPF is set to 1 during execution of a normal regeneration operation, referred to hereinafter, for regenerating the filter 8. If the answer to this question is affirmative (YES), i.e. if the normal regeneration operation for regenerating the filter 8 is being executed, there is a fear that the differential pressure DP is not stable in accordance with the execution of the normal regeneration operation, so that it is judged that the environmental conditions are not satisfied, and the above-mentioned step 22 is executed to set the environmental condition flag F_ENV to 0, followed by terminating the present process.

Further, if the answer to the question of the step 23 is negative (NO), it is determined whether or not the frozen state-indicative flag F_FRZ is equal to 1 (step 24). If the answer to this question is affirmative (YES), it is judged that the differential pressure pipe 6a has already been frozen, and the environmental conditions are not satisfied, and the above-mentioned step 22 is executed, followed by terminating the present process.

On the other hand, if the answer to the question of the step 24 is negative (NO), it is determined whether or not the intake air temperature TA is not higher than a predetermined temperature TAREF (e.g. - 20°C) (step 25). If the answer to this question is negative (NO), it is judged that the environmental conditions are not satisfied since there is a low possibility that the differential pressure pipe 6a is frozen, and it is unnecessary to determine the frozen state of the differential pressure pipe 6a, and the aforementioned step 22 is executed, followed by terminating the present process.

Further, if the answer to the question of the step 25 is affirmative (YES), i.e. if the intake air temperature TA is not higher than the predetermined temperature TAREF, it is judged that the environmental conditions are satisfied since there is a high possibility that the differential pressure pipe 6a is frozen, and to indicate this fact, the environmental condition flag F_ENV is set to 1 (step 26), followed by terminating the present process.

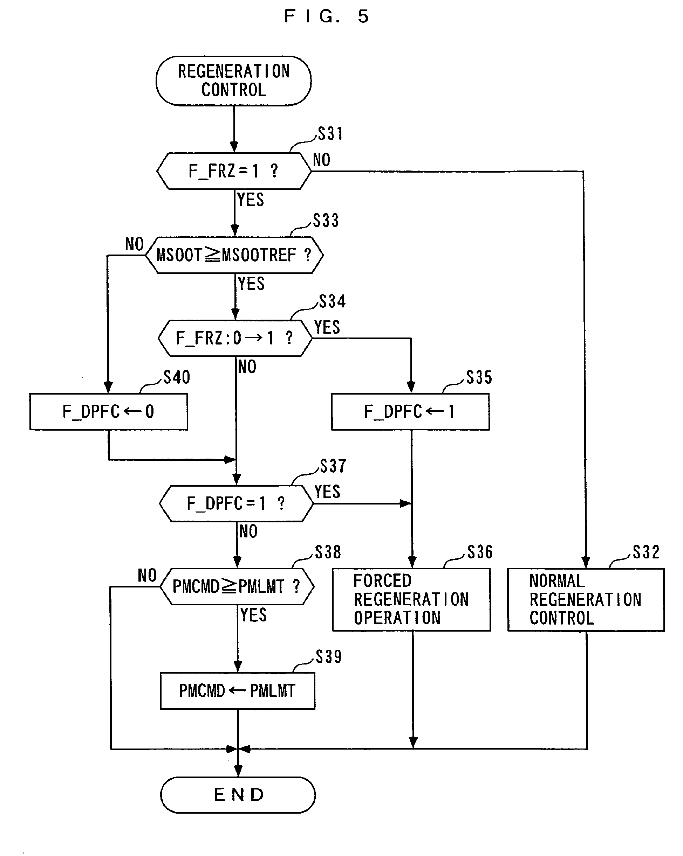

FIG. 5 is a flowchart of a process for the above-mentioned regeneration control for controlling the regeneration operation for regenerating the filter 8. The present process is carried out in synchronism with generation of the TDC signal. In the present process, first, in a step 31, it is determined whether or not the frozen state-indicative flag F_FRZ is equal to 1. If the answer to this question is negative (NO), i.e. if it is determined that the differential pressure pipe 6a is not in the frozen state, normal regeneration control is carried out (step 32), followed by terminating the present process.

The normal regeneration control is carried out as follows: First, the amount of PM emitted from the engine 3 (PM emission amount) is calculated by searching a predetermined map (not shown) according to the engine speed NE and the fuel injection amount QINJ. Next, the PM emission amount is added to the amount of PM deposited on the filter 8 (PM deposition amount) calculated hitherto to thereby calculate the present PM deposition amount MSOOT. Then, when the value of the PM deposition amount is not smaller than a predetermined value, not only normal fuel injection but also additional fuel injection is performed, whereby the normal regeneration operation is executed. Further, the normal regeneration operation is terminated when a value obtained by subtracting the amount of PM burned along with the regeneration operation from the PM deposition amount becomes approximately equal to 0.

On the other hand, if the answer to the question of the step 31 is affirmative (YES), i.e. if the differential pressure pipe 6a is in the frozen state, it is determined whether or not the PM deposition amount MSOOT is not smaller than a predetermined value MSOOTREF (step 33). If the answer to this question is affirmative (YES), it is determined whether or not the frozen state-indicative flag F_FRZ has been changed from 0 to 1 between the immediately preceding loop and the present loop (step 34). If the answer to this question is affirmative (YES), i.e. if it is immediately after the differential pressure pipe 6a is determined to be in the frozen state, it is judged that a forced regeneration operation for regenerating the filter 8 is to be executed. Then, a forcible regeneration flag F_DPFC is set to 1 (step 35), and the forced regeneration operation is executed (step 36), followed by terminating the present process.

Further, if the answer to the question of the step 34 is negative (NO), i.e. if it is a second or later loop after the differential pressure pipe 6a is determined to be in the frozen state, it is determined whether or not the forcible regeneration flag F_DPFC is equal to 1 (step 37). If the answer to this question is affirmative (YES), the process proceeds to the aforementioned step 36, wherein the forced regeneration operation is continued.

When the PM deposition amount MSOOT is made smaller than the predetermined value MSOOTREF by execution of the forced regeneration operation, the answer to the question of the step 33 becomes negative (NO). In this case, it is judged that the forced regeneration operation is to be terminated since almost all PM deposited on the filter 8 have been burned, and to indicate this fact, the forcible regeneration flag F_DPFC is set to 0 (step 40), and then the process proceeds to the above-mentioned step 37. By execution of the step 40, the answer to the question of the step 37 becomes negative (NO), and in this case, it is determined whether or not the demanded torque PMCMD is not smaller than an upper limit value PMLMT (step 38).

If the answer to this question is negative (NO), the present process is terminated, whereas if the answer to the question of the step 38 is affirmative (YES), the demanded torque PMCMD is limited to the upper limit value PMLMT (step 39), followed by terminating the present process.

As described heretofore, according to the present embodiment, in the case where it is determined that the engine 3 is in the after-run state (YES to the step 11), if the absolute value (|DPREF2-DP |) of the difference between the second predetermined pressure DPREF2 and the differential pressure DP is not smaller than the predetermined value DREF (YES to the step 14), it is determined that the differential pressure pipe 6a is in the frozen state, and therefore it is possible to properly determine the frozen state based on the differential pressure DP in the stable state.

Further, if it is determined that the differential pressure pipe 6a is in the frozen state, the abnormality determination of the filter 8 based on the differential pressure DP is inhibited (YES to the step 1), so that it is possible to avoid erroneous abnormality determination of the filter 8 based on the differential pressure DP that is obtained when the differential pressure pipe 6a is in the frozen state. As a result, it is possible to improve the accuracy of abnormality determination of the filter 8, thereby making it possible to prevent erroneous warning from being given to the driver based on an erroneous abnormality determination of the filter 8.

Further, after the differential pressure pipe 6a is determined to be in the frozen state, the normal regeneration operation is inhibited before the differential pressure pipe 6a is determined not to be in the frozen state and hence even when an excess amount of PM is deposited on the filter 8, it is possible to prevent the filter 8 from being overheated by thermal runaway caused by sudden combustion of the excess amount of PM deposited on the filter 8, thereby making it possible to prevent cracking or melting of the filter 8.

Furthermore, immediately after the differential pressure pipe 6a is determined to be in the frozen state, the forced regeneration operation for regenerating the filter 8 is carried out (step 35), so that the PM deposition amount MSOOT can be made approximately equal to 0, whereby even when the frozen state of the differential pressure pipe 6a continues for a long time period, it is possible to suppress the PM deposition amount MSOOT deposited along with the subsequent operation of the engine 3. As a result, even when the normal regeneration operation for regenerating the filter 8 is inhibited until the differential pressure pipe 6a is determined not to be in the frozen state, the PM deposition amount MSOOT deposited on the filter 8 can be suppressed, whereby it is possible to avoid thermal runaway caused by the normal regeneration operation executed when the differential pressure pipe 6a is determined not to be in the frozen state.

Further, when it is determined that the differential pressure pipe 6a is in the frozen state, the demanded torque PMCMD is limited (steps 38 and 39), and accordingly the fuel injection amount QINJ is limited, whereby it is possible to prevent a rise in the temperature of exhaust gases, which makes it possible to prevent natural combustion of PM. As a result, when an excess amount of PM is deposited on the filter 8, it is possible to prevent thermal runaway from being caused by natural combustion of the PM.

Furthermore, if it is determined that the differential pressure pipe 6a is in the frozen state, the differential pressure pipe 6a is released from the frozen state, when the second timer value TM2, which is engine off time before the engine 3 is started, is longer than the second predetermined time period TREF2, and at the same time the absolute value (|DPREF2-DP|) of the difference between the second predetermined pressure DPREF2 and the differential pressure DP is smaller than the predetermined value DREF, so that it is possible to properly release the differential pressure pipe 6a from the frozen state while eliminating the influence of the temperature of the filter 8 and its neighborhood on the differential pressure.

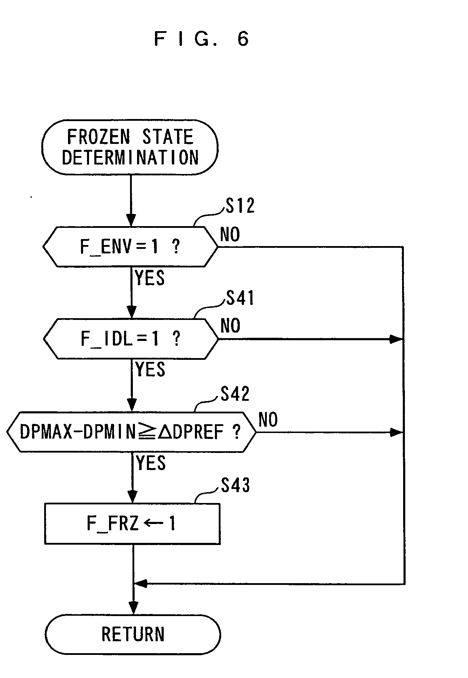

FIG. 6 shows a variation of the process for determining a frozen state of the differential pressure pipe 6a. In the variation, component elements and steps identical to those referred to in the process shown in FIG. 3 are denoted by the same reference numerals, and detailed description thereof is omitted. In the present process, first, in the step 12, it is determined whether or not the environmental condition flag F_ENV is equal to 1. If the answer to this question is negative (NO), it is judged that the environmental conditions for determining the frozen state of the differential pressure pipe 6a are not satisfied, and the present process is immediately terminated without determining the frozen state. On the other hand, if the answer to the question of the step 12 is affirmative (YES), it is determined whether or not an idling flag F_IDL is equal to 1 (step 41). The idling flag F_IDL is set to 1 when it is determined that the engine 3 is idling. A process for determining idling of the engine 3 will be described hereinafter.

If the answer to this question is negative (NO), i.e. if the engine 3 is not idling, the present process is terminated, whereas if the answer to the question of the step 41 is affirmative (YES), it is determined whether or not the difference between a maximum value DPMAX and a minimum value DPMIN of the differential pressure DP (= DPMAX - DPMIN) is not smaller than a predetermined value ΔDPREF (step 42). A process for calculating the maximum value DPMAX and the minimum value DPMIN will be described hereinafter. As described hereinabove, in the idling state of the engine 3, when the differential pressure pipe 6a is not frozen, the differential pressure DP is approximately constant, whereas when the differential pressure pipe 6a is frozen, the differential pressure DP largely varies, and hence the difference between the maximum value DPMAX and the minimum value DPMIN becomes larger. Therefore, if the answer to the question of the step 42 is affirmative (YES), i.e. if DPMAX - DPMIN ≧ Δ DREF holds, it is determined that the differential pressure pipe 6a is in the frozen state, and to indicate this fact, the frozen state-indicative flag F_FRZ is set to 1 (step 43), followed by terminating the present process. On the other hand, if the answer to the question of the step 42 is negative (NO), the present process is immediately terminated.

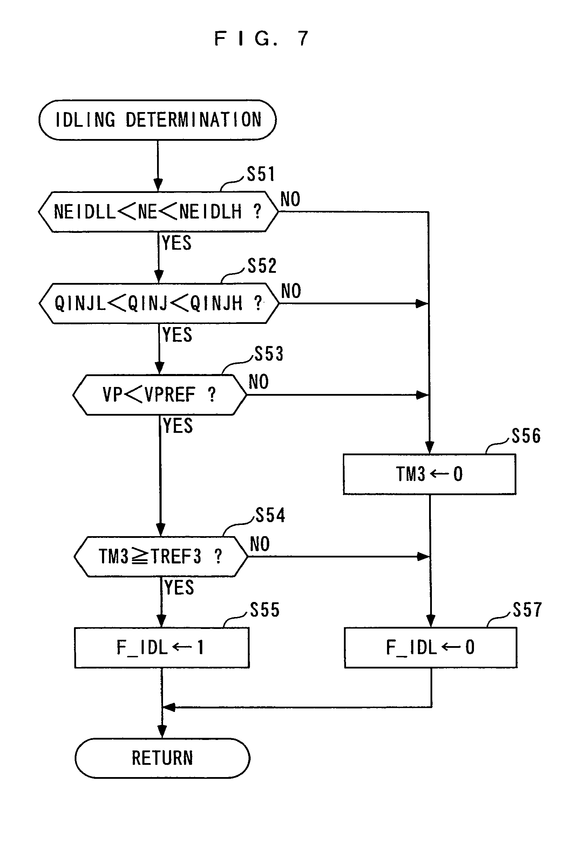

FIG. 7 is a subroutine of the above-mentioned process for determining idling of the engine 3. In the present process, first, in steps 51 to 53, it is determined whether or not the engine speed NE is between a predetermined lower limit value NEIDLL and a predetermined upper limit value NEIDLH, whether or not the fuel injection amount QINJ is between a predetermined lower limit value QINJL and a predetermined upper limit value QINJH, and whether or not the vehicle speed VP is smaller than a predetermined value VPREF, respectively. If any of the answers to these questions is negative (NO), a third timer value TM3 of a third timer (not shown) of an up-count type is reset to 0 (step 56). Then, it is judged that the engine 3 is not idling, and the idling flag F_IDL is set to 0 (step 57), followed by terminating the present process.

On the other hand, if all the answers to the questions of the steps 51 to 53 are affirmative (YES), it is determined whether or not the third timer value TM3 is not smaller than a third predetermined time period TREF3 (step 54). If the answer to this question is negative (NO), the above-mentioned step 57 is executed, followed by terminating the present process.

Further, if the answer to the question of the step 54 is affirmative (YES), i.e. if the conditions of the steps 51 to 53 are continuously satisfied for the third predetermined time period TREF3 or longer, it is judged that the engine 3 is idling, and the idling flag F_IDL is set to 1 (step 55), followed by terminating the present process.

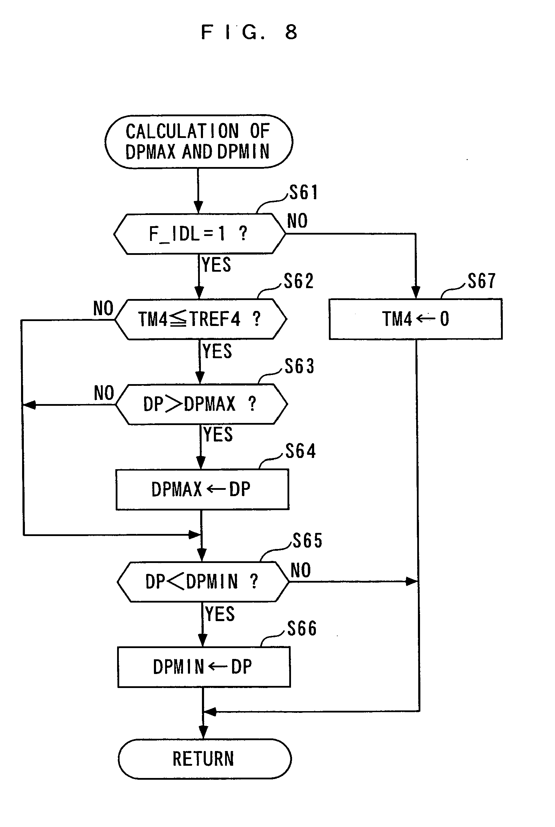

FIG. 8 is a subroutine of the above-mentioned process for calculating the maximum value DPMAX and the minimum value DPMIN of the differential pressure DP. In the present process, first, in a step 61, it is determined whether or not the idling flag F_IDL is equal to 1. If the answer to this question is negative (NO), a fourth timer value TM4 of a fourth timer (not shown) of an up-count type is reset to 0 (step 67), followed by terminating the present process.

On the other hand, if the answer to the question of the step 61 is affirmative (YES), it is determined whether or not the fourth timer value TM4 is not larger than a fourth predetermined time period TREF4 (step 62). If the answer to this question is affirmative (YES), it is determined whether or not the differential pressure DP is larger than the maximum value DPMAX (step 63). The maximum value DPMAX is initialized to a predetermined negative value at the start of idling. If the answer to the question of the step 63 is negative (NO), i.e. if DP ≦ DPMAX holds, the process proceeds to a step 65, referred to hereinafter.

Further, if the answer to the question of the step 63 is affirmative (YES), i.e. if the differential pressure DP is larger than the maximum value DPMAX, the differential pressure DP is set as the maximum value DPMAX (step 64), whereby the maximum value DPMAX is updated, and the process proceeding to the step 65.

In the step 65, it is determined whether or not the differential pressure DP is smaller than the minimum value DPMIN. The minimum value DPMIN is initialized to a predetermined positive value at the start of idling. If the answer to the question of the step 65 is negative (NO), i.e. if DP ≧ DPMIN holds, the present process is immediately terminated.

Further, if the answer to the question of the step 65 is affirmative (YES), the differential pressure DP is set as the minimum value DPMIN (step 66), whereby the minimum value DPMIN is updated, followed by terminating the present process.

On the other hand, if the answer to the question of the step 62 is negative (NO), i.e. if the fourth predetermined time period TREF4 has elapsed after the start of idling, the process proceeds to the above-mentioned step 65 without calculating the maximum value DPMAX, wherein the minimum value DPMIN is calculated, followed by terminating the present process.

As described above, according to the variation, if it is determined that the engine 3 is idling, when the difference between the maximum value DPMAX and the minimum value DPMIN of the differential pressure DP (= DPMAX - DPMIN) is not smaller than the predetermined value Δ DREF, it is determined that the differential pressure pipe 6a is in the frozen state, so that it is possible to properly determine the frozen state, thereby making it possible to obtain the same advantageous effects as provided by the above-described embodiment.

It should be noted that the present invention is by no means limited to the embodiment described above, but it can be practiced in various forms. For example, although in the above-described embodiment, the after-run state or the idling state is set as a specific operating state of the engine 3 for determining the frozen state of the differential pressure pipe 6a, this is not limitative, but another operating state in which the behavior of the differential pressure is clearly different between the frozen state and the unfrozen state of the differential pressure pipe may be set as the specific operating state.

Further, although in the above-described embodiment, determination of whether or not the differential pressure pipe 6a is in the frozen state is performed in the after-run state of the engine 3, based on the difference between the second predetermined pressure DPREF2 and the differential pressure DP, this is not limitative, but instead of this or in combination with this, the determination may be performed in a state where the engine 3 is being started. In this case, the term "state where the engine 3 is being started" is intended to mean a state of the engine 3 after the ignition switch is turned on and before cranking of the engine 3 is started or a state where the engine 3 is being cranked.

Furthermore, although in the above-described embodiment, when the differential pressure pipe 6a is determined to be in the frozen state, the very abnormality determination of the filter 8 is inhibited, this is not limitative, but it is only required to inhibit determination that the filter 8 is abnormal, when the differential pressure pipe 6a is determined to be in the frozen state. For example, the determination that the filter 8 is abnormal may be suspended while the abnormality determination of the filter 8 is performed.

Further, although in the above-described embodiment, the differential pressure DP across the filter 8 is detected by the single differential pressure sensor 23, respective pressures on the upstream side and the downstream side of the filter 8 may be detected using respective separate sensors, to thereby calculate the differential pressure DP based on the detection values of the pressures.

Furthermore, although in the above-described embodiment, the present invention is applied to a diesel engine installed on a vehicle, by way of example, this is not limitative, but the present invention may be applied to various types of engines, such as a gasoline engine, other than the diesel engine. Further, the present invention can also be applied to engines other than engines for vehicles, including engines for ship propulsion machines, such as an outboard motor having a vertically-disposed crankshaft.

It is further understood by those skilled in the art that the foregoing are preferred embodiments of the invention, and that various changes and modifications may be made without departing from the scope thereof, as defined by the claims.

An abnormality determination system for a filter, which is capable of properly determining the frozen state of a differential pressure pipe to thereby improve the accuracy of abnormality determination of the filter. The abnormality determination system for the filter determines whether or not the filter is abnormal, based on the detected differential pressure between pressures on the upstream side and the downstream side of the filter. Further, if it is determined that an internal combustion engine is in a specific operating state, the abnormality determination system determines whether or not a differential pressure pipe is in a frozen state, based on the detected differential pressure, and if it is determined that the differential pressure pipe in the frozen state, the abnormality determination system inhibits determination that the filter is abnormal.

## Claims

1. An abnormality determination system (1) for a filter (8) that is disposed in an exhaust passage (6) for collecting particulates from exhaust gases discharged from an internal combustion engine (3) to thereby purify the exhaust gases, including:
a differential pressure pipe (6a) connected between respective portions of an exhaust passage upstream and downstream of the filter (8),
differential pressure-detecting means (23) disposed in said differential pressure pipe (6a), for detecting a differential pressure between pressures on the upstream side and the downstream side of the filter (8),
abnormality-determining means (2) for determining whether or not the filter (8) is abnormal, based on the detected differential pressure,
frozen state-determining means (2) for determining whether or not said differential pressure pipe (6a) is in a frozen state, and
determination inhibiting means (2) for inhibiting said abnormality-determining means (2) from determining that the filter (8) is abnormal, when said frozen state-determining means (2) determines that said differential pressure pipe (6a) is in the frozen state,
**characterized by** comprising:
specific operating state-determining means (2) for determining whether or not the engine (3) is in a specific operating state;
wherein the frozen state-determining means (2) determines whether or not said differential pressure pipe (6a) is in a frozen state, based on the detected differential pressure, when said specific operating state-determining means determines that the engine (3) is in the specific operating state.

2. The abnormality determination system (1) as claimed in claim 1, wherein the specific operating state is at least one of a state where the engine (3) is being started and an after-run state of the engine (3) immediately after stoppage of the engine (3), and
wherein when said specific operating state-determining means (2) determines that the engine (3) is in at least one of the state where the engine (3) is being started and the after-run state, said frozen state-determining means (2) determines that said differential pressure pipe (6a) is in the frozen state, when a difference between a predetermined pressure and the differential pressure is not smaller than a predetermined value.

3. The abnormality determination system (1) as claimed in claim 1, wherein the specific operating state is an idling state of the engine (3), and
wherein when said specific operating state-determining means (2) determines that the engine (3) is in the idling state, said frozen state-determining means determines that said differential pressure pipe (6a) is in the frozen state, when a difference between a maximum value and a minimum value of the differential pressure in the idling state is not smaller than a predetermined value.

4. The abnormality determination system (1) as claimed in any one of claims 1 to 3, further comprising:
regeneration operation execution means (2) for executing a regeneration operation for regenerating the filter (8) by causing particulates deposited on the filter (8) to be burned; and
regeneration, operation forcible execution means (2) for forcibly executing the regeneration operation for regenerating the filter (8) separately from said regeneration operation execution means (2), immediately after said frozen state-determining means (2) has determined that said differential pressure pipe is in the frozen state.

5. The abnormality determination system (1) as claimed in claim 4, further comprising regeneration operation-inhibiting means (2) operable when said differential pressure pipe (6a) is determined to be in the frozen state, to inhibit the regeneration operation for regenerating the filter (8) by said regeneration operation execution means (2), until said differential pressure pipe (6a) is determined not to be in the frozen state.

6. The abnormality determination system (1) as claimed in any one of claims 1 to 5, further comprising torque-limiting means (2) operable when said differential pressure pipe (6a) is determined to be in the frozen state, to limit torque of the engine (3) until said differential pressure pipe (6a) is determined not to be in the frozen state.

7. The abnormality determination system (1) as claimed in any one of claims 1 to 6, further comprising engine off time-acquiring means (2) for acquiring engine (3) off time before the engine is started, and
wherein in a case where said frozen state-determining means (2) has determined that said differential pressure pipe (6a) is in the frozen state, said frozen state-determining means (2) determines that said differential pressure pipe (6a) has been released from the frozen state, when the acquired engine off time is longer than a predetermined time period and at the same time a difference between a predetermined pressure and the differential pressure is smaller than a predetermined value when the engine (3) is being started thereafter.

## Patentansprüche

1. Abnormalität-Bestimmungssystem (1) für einen Filter (8), welches in einem Abgasdurchgang (6) zum Sammeln von Feinstaub von Abgasen, welche von einem Verbrennungsmotor (3) ausgestoßen werden, um **dadurch** die Abgase zu reinigen, umfassend:
ein Differenzdruckrohr (6a), welches zwischen jeweiligen Abschnitten eines Abgasdurchgangs stromaufwärts und stromabwärts von dem Filter (8) verbunden ist,
Differenzdruck-Detektionsmittel (23), welche in dem Differenzdruckrohr (6a) angeordnet sind, zum Detektieren eines Differenzdrucks zwischen Drücken an der stromaufwärts gelegenen Seite und der stromabwärts gelegenen Seite des Filters (8),
Abnormalität-Bestimmungssmittel (2) zum Bestimmen, ob der Filter (8) abnormal ist oder nicht, beruhend auf dem detektierten Differenzdruck,
Eingefrorener-Zustand-Bestimmungsmittel (2) zum Bestimmen, ob das Differenzdruckrohr (6a) in einem eingefrorenen Zustand ist oder nicht, und Bestimmungs-Hemmungsmittel (2) zum Hemmen der Abnormalität-Bestimmungssmittel (2) vom Bestimmen, dass der Filter (8) abnormal ist, wenn die Eingefrorener-Zustand-Bestimmungsmittel (2) bestimmen, dass das Differenzdruckrohr (6a) in dem eingefrorenen Zustand ist,
**gekennzeichnet durch** Umfassen von:
Spezifischer-Betriebszustand-Bestimmungsmittel (2) zum Bestimmen, ob der Motor (3) in einem spezifischen Betriebszustand ist oder nicht;
wobei die Eingefrorener-Zustand-Bestimmungsmittel (2) bestimmen, ob das Differenzdruckrohr (6a) in einem eingefrorenen Zustand ist oder nicht, beruhend auf dem detektierten Differenzdruck, wenn die Spezifischer-Betriebszustand-Bestimmungsmittel bestimmen, dass der Motor (3) in dem spezifischen Betriebszustand ist.

2. Abnormalität-Bestimmungssystem (1) nach Anspruch 1, wobei der spezifische Betriebszustand wenigstens einer von einem Zustand ist, in dem der Motor (3) gestartet wird und ein Nach-Lauf-Zustand des Motors (3) unmittelbar nach einem Stoppen des Motors (3), und
wobei die Spezifischer-Betriebszustand-Bestimmungsmittel (2) bestimmen, dass der Motor (3) in wenigstens einem von dem Zustand ist, in dem der Motor (3) gestartet wird und dem Nach-Lauf-Zustand, die Eingefrorener-Zustand-Bestimmungsmittel (2) bestimmen, dass das Differenzdruckrohr (6a) in dem eingefrorenen Zustand ist, wenn ein Unterschied zwischen einem vorbestimmten Druck und dem Differenzdruck nicht kleiner als ein vorbestimmter Wert ist.

3. Abnormalität-Bestimmungssystem (1) nach Anspruch 1, wobei der spezifische Betriebszustand in einem Leerlauf-Zustand des Motors (3) ist, und
wobei, wenn die Spezifischer-Betriebszustand-Bestimmungsmittel (2) bestimmen, dass der Motor (3) in dem Leerlauf-Zustand ist, die Eingefrorener-Zustand-Bestimmungsmittel bestimmen, dass das Differenzdruckrohr (6a) in dem eingefrorenen Zustand ist, wenn ein Unterschied zwischen einem Maximalwert und einem Minimalwert des Differenzdrucks in dem Leerlauf-Zustand nicht kleiner als ein vorbestimmter Wert ist.

4. Abnormalität-Bestimmungssystem (1) nach einem der Ansprüche 1 bis 3, ferner umfassend:
Regenerationsbetrieb-Ausführungsmittel (2) zum Ausführen eines Regenerationsbetriebs zum Regenerieren des Filters (8) durch Verursachen, dass auf dem Filter (8) abgesetzter Feinstaub verbrannt wird; und
Regenerationsbetrieb-Zwangsausführungsmittel (2) zum zwangsweisen Ausführen des Regenerationsbetriebs zum Regenerieren des Filters (8) getrennt von dem Regenerationsbetrieb-Ausführungsmittel (2), unmittelbar nachdem die Eingefrorener-Zustand-Bestimmungsmittel (2) bestimmt haben, dass das Differenzdruckrohr in dem eingefrorenen Zustand ist.

5. Abnormalität-Bestimmungssystem (1) nach Anspruch 4, ferner umfassend Regenerationsbetrieb-Hemmungsmittel (2), welche betreibbar sind, wenn das Differenzdruckrohr (6a) bestimmt wird, in dem eingefrorenen Zustand zu sein, um den Regenerationsbetrieb zum Regenerieren des Filters (8) durch die Regenerationsbetrieb-Ausführungsmittel (2) zu hemmen, bis das Differenzdruckrohr (6a) bestimmt wird, in dem eingefrorenen Zustand zu sein.

6. Abnormalität-Bestimmungssystem (1) nach einem der Ansprüche 1 bis 5, ferner umfassend Drehmoment-Begrenzungsmittel (2), welche betreibbar sind, wenn das Differenzdruckrohr (6a) bestimmt wird, in dem eingefrorenen Zustand zu sein, um das Drehmoment des Motors (3) zu begrenzen, bis das Differenzdruckrohr (6a) bestimmt wird, nicht in dem eingefrorenen Zustand zu sein.

7. Abnormalität-Bestimmungssystem (1) nach einem der Ansprüche 1 bis 6, ferner umfassend Motor-Aus-Zeit-Erfassungsmittel (2) zum Erfassen einer Motor (3)-Aus-Zeit bevor der Motor gestartet wird, und
wobei in einem Fall, in dem die Eingefrorener-Zustand-Bestimmungsmittel (2) bestimmt haben, dass das Differenzdruckrohr (6a) in dem eingefrorenen Zustand ist, die Eingefrorener-Zustand-Bestimmungsmittel (2) bestimmen, dass das Differenzdruckrohr (6a) von dem eingefrorenen Zustand freigegeben wurde, wenn die erfasste Motor-Aus-Zeit länger als eine vorbestimmte Zeitdauer ist und gleichzeitig ein Unterschied zwischen einem vorbestimmten Druck und dem Differenzdruck kleiner als ein vorbestimmter Wert ist, wenn der Motor (3) danach gestartet wird.

## Revendications

1. Système de détermination d'anomalies (1) pour un filtre (8) qui est disposé dans un passage d'échappement (6) pour collecter des particules à partir de gaz d'échappement évacué d'un moteur à combustion interne (3) afin de purifier ainsi les gaz d'échappement, comprenant :
un tuyau de pression différentielle (6a) raccordé entre des portions respectives d'un passage d'échappement en amont et en aval du filtre (8),
des moyens de détection de pression différentielle (23) disposés dans ledit tuyau de pression différentielle (6a), permettant de détecter une pression différentielle entre les pressions du côté amont et du côté aval du filtre (8),
des moyens de détermination d'anomalies (2) permettant de déterminer si le filtre (8) présente des anomalies ou non, d'après la pression différentielle détectée,
des moyens de détermination d'état gelé (2) permettant de déterminer si ledit tuyau de pression différentielle (6a) est dans un état gelé ou non, et
des moyens d'inhibition de détermination (2) permettant d'inhiber la détermination desdits moyens de détermination d'anomalies (2) selon laquelle le filtre (8) présente des anomalies, lorsque lesdits moyens de détermination d'état gelé (2) déterminent que ledit tuyau de pression différentielle (6a) est dans l'état gelé,
**caractérisé en ce qu'**il comprend :
des moyens de détermination d'état de fonctionnement spécifique (2) permettant de déterminer si le moteur (3) est dans un état de fonctionnement spécifique ou non ;
dans lequel les moyens de détermination d'état gelé (2) déterminent si ledit tuyau de pression différentielle (6a) est dans un état gelé ou non, d'après la pression différentielle détectée, lorsque lesdits moyens de détermination d'état de fonctionnement spécifique déterminent que le moteur (3) est dans l'état de fonctionnement spécifique.

2. Système de détermination d'anomalies (1) selon la revendication 1, dans lequel l'état de fonctionnement spécifique est au moins l'un d'un état où le moteur (3) est démarré et un état après arrêt du moteur (3) immédiatement après l'interruption du moteur (3), et
dans lequel lorsque lesdits moyens de détermination d'état de fonctionnement spécifique (2) déterminent que le moteur (3) est dans au moins l'un d'un état où le moteur (3) est démarré et l'état après arrêt, lesdits moyens de détermination d'état gelé (2) déterminent que ledit tuyau de pression différentielle (6a) est dans l'état gelé, lorsqu'une différence entre une pression déterminée et la pression différentielle n'est pas inférieure à une valeur prédéterminée.

3. Système de détermination d'anomalies (1) selon la revendication 1, dans lequel l'état de fonctionnement spécifique est un état au ralenti du moteur (3), et
dans lequel lorsque lesdits moyens de détermination d'état de fonctionnement spécifique (2) déterminent que le moteur (3) est dans l'état au ralenti, lesdits moyens de détermination d'état gelé déterminent que ledit tuyau de pression différentielle (6a) est dans l'état gelé, lorsqu'une différence entre une valeur maximale et une valeur minimale de la pression différentielle dans l'état au ralenti n'est pas inférieure à une valeur prédéterminée.

4. Système de détermination d'anomalies (1) selon l'une quelconque des revendications 1 à 3, comprenant en outre :
des moyens d'exécution d'opération de régénération (2) permettant d'exécuter une opération de régénération pour régénérer le filtre (8) en amenant les particules déposées sur le filtre (8) à brûler ; et
des moyens d'exécution forcée d'opération de régénération (2) permettant d'exécuter de force l'opération de régénération pour régénérer le filtre (8) séparément desdits moyens d'exécution d'opération de régénération (2), immédiatement après que lesdits moyens de détermination d'état gelé (2) ont déterminé que ledit tuyau de pression différentielle est dans l'état gelé.

5. Système de détermination d'anomalies (1) selon la revendication 4, comprenant en outre des moyens d'inhibition d'opération de régénération (2) opérationnel lorsque ledit tuyau de pression différentielle (6a) est déterminé comme étant dans l'état gelé, pour inhiber l'opération de régénération pour régénérer le filtre (8) par lesdits moyens d'exécution d'opération de régénération (2), jusqu' à ce que ledit tuyau de pression différentielle (6a) soit déterminé comme n'étant pas dans l'état gelé.

6. Système de détermination d'anomalies (1) selon l'une quelconque des revendications 1 à 5, comprenant en outre des moyens de limitation de couple (2) opérationnels lorsque ledit tuyau de pression différentielle (6a) est déterminé comme étant dans l'état gelé, pour limiter le couple du moteur (3) jusqu'à ce que ledit tuyau de pression différentielle (6a) soit déterminé comme n'étant pas dans l'état gelé.

7. Système de détermination d'anomalies (1) selon l'une quelconque des revendications 1 à 6, comprenant en outre des moyens d'acquisition de pause de moteur (2) permettant d'acquérir la pause de moteur (3) avant que le moteur ne soit démarré, et
dans lequel dans un cas où lesdits moyens de détermination d'état gelé (2) ont déterminé que ledit tuyau de pression différentielle (6a) est dans l'état gelé, lesdits moyens de détermination d'état gelé (2) déterminent que ledit tuyau de pression différentielle (6a) a été libéré de l'état gelé, lorsque la pause de moteur acquise est supérieure à une période prédéterminée et dans le même temps une différence entre une pression prédéterminée et la pression différentielle est inférieure à une valeur prédéterminée lorsque le moteur (3) est démarré par la suite.
